# EUROPÄISCHE PATENTSCHRIFT

(11) **EP 4 065 402 B1**
(45) Veröffentlichungstag und Bekanntmachung des Hinweises auf die Patenterteilung: **01.11.2023**
(21) Anmeldenummer: 20808400.4
(22) Anmeldetag: 18.11.2020
(51) Int. Cl.: B60K 37/06

(54) **FUNKTIONALES INNENAUSSTATTUNGSTEIL FÜR EIN KRAFTFAHRZEUG UND VERFAHREN ZUM HERSTELLEN EINES SOLCHEN FUNKTIONALEN INNENAUSSTATTUNGSTEILS**
FUNCTIONAL INTERIOR FITTING PART FOR A MOTOR VEHICLE, AND METHOD FOR PRODUCING SUCH A FUNCTIONAL INTERIOR FITTING PART
PIÈCE DE GARNITURE INTÉRIEURE FONCTIONNELLE POUR UN VÉHICULE AUTOMOBILE, ET PROCÉDÉ DE PRODUCTION D'UNE TELLE PIÈCE DE GARNITURE INTÉRIEURE FONCTIONNELLE

(30) Priorität: 25.11.2019 DE 102019131783
(43) Veröffentlichungstag der Anmeldung: 05.10.2022
(73) Patentinhaber: Lisa Dräxlmaier GmbH, 84137 Vilsbiburg (DE)
(72) Erfinder: FEINEIS, Martin, 84028 Landshut (DE); HERB, Andreas, 82131 Gauting (DE)
(86) Internationale Anmeldenummer: PCT/EP2020/082526
(87) Internationale Veröffentlichungsnummer: WO 2021/104963

(56) Entgegenhaltungen:
- EP-A2- 3 184 348
- DE-A1-102015 015 417
- US-A1- 2019 077 311
- US-A1- 2019 135 199

## Beschreibung

### Technisches Gebiet

Die vorliegende Erfindung betrifft ein funktionales Innenausstattungsteil für ein Fahrzeug, insbesondere für ein Kraftfahrzeug. Ferner betrifft die Erfindung ein Verfahren zum Herstellen eines solchen funktionalen Innenausstattungsteils.

### Stand der Technik

Im Stand der Technik ist es bekannt, Fahrzeug-Innenausstattungsteile mit Bedienzonen auszustatten. Damit wird erreicht, dass eine Bedienmöglichkeit, beispielsweise die Steuermöglichkeit für bedienbare Systeme, wie beispielsweise Head-up-Displays oder Bildschirme, bereitgestellt werden kann. Hierzu wird typischerweise eine harte Bedienoberfläche in das Innenausstattungsteil integriert.

Die US 2019/077311 A1 zeigt ein funktionales Innenausstattungsteil für ein Fahrzeug, das eine Schichtstruktur aufweist, wobei die Schichtstruktur zumindest einen Grundträger, eine Funktionsschicht und eine Haptikschicht aufweist.

Die DE 10 2015 015 417 A1 zeigt eine Bedienvorrichtung für einen Kraftwagen, mittels welcher bei geringen Bauraumanforderungen elektrisch gesteuert ein an einer Oberfläche wahrnehmbares haptisches Signal erzeugbar ist. Bei der Bedienvorrichtung ist auf einer die Ausnehmung überdeckenden Membran ein Piezoelement angeordnet.

So beschreibt die EP 2 378 846 A1 ein Formbauteil, das eine elektrische und/oder elektronische Schaltung mit einer Leiterbahnstruktur und wenigstens einem elektrischen oder elektronischen Bauelement umfasst. Insbesondere ist dort die Oberfläche des Formbauteil funktional gestaltet, so dass sich ein dreidimensional geformtes Bedienelement ergibt.

Die bekannten Innenausstattungsteile haben allerdings den Nachteil, dass die Bedienzonen zur Erfüllung der Bedienungsfunktion hart ausgestaltet sein müssen. Eine Integration in weiche Komfortzonen, beispielsweise in eine Armauflage, ist daher nur schwer umsetzbar. Die Bedien- und Komfortzonen sind folglich räumlich klar abgegrenzt und nicht an die Anatomie des Verwenders, wie beispielsweise Größe; Sitzzwerg oder Sitzriese und dessen Sitzposition oder dessen Bedürfnisse anpassbar.

### Beschreibung der Erfindung

Der Erfindung liegt daher die Aufgabe zugrunde, ein funktionales Innenausstattungsteil für ein Fahrzeug anzugeben, das die oben genannten Probleme und Nachteile des Standes der Technik ausräumt. Insbesondere ist es Aufgabe der vorliegenden Erfindung, ein funktionales Innenausstattungsteil anzugeben, das eine räumliche Zusammenlegung von Bedien- und Komfortzonen und hiermit eine verbesserte Integration von Bedienzonen in Komfortzonen ermöglicht.

Der Erfindung liegt ferner die Aufgabe zugrunde, ein Verfahren zum Herstellen eines solchen funktionalen Innenausstattungsteils anzugeben.

Die erfindungsgemäße Lösung besteht darin, ein funktionales Innenausstattungsteil für ein Fahrzeug anzugeben, das eine Schichtstruktur aufweist, wobei die Schichtstruktur zumindest einen Grundträger, eine Funktionsschicht und eine Haptikschicht aufweist, wobei das funktionale Innenausstattungsteil eine elektrische Abschirmschicht aufweist, wobei die elektrische Abschirmschicht zu einer selektiven Sensor-Feldausprägung in Richtung eines Bedien-Halbraumes führt, und die elektrische Abschirmschicht auf einer von der Haptikschicht abgewandten Seite der Funktionsschicht angeordnet ist.

Grundsätzlich ist der Schichtaufbau derart, dass zu der Bedienseite bzw. Bedienoberfläche hin gesehen auf bzw. über dem Grundträger die Funktionsschicht und auf bzw. über der Funktionsschicht die Haptikschicht angeordnet ist. Dass die elektrische Abschirmschicht auf einer von der Haptikschicht abgewandten Seite der Funktionsschicht angeordnet ist, bedeutet, dass die elektrische Abschirmschicht beispielsweise zwischen der Funktionsschicht und dem Grundträger oder auf einer von der Funktionsschicht abgewandten Seite des Grundträgers angeordnet sein kann.

Allgemeiner formuliert ist die elektrische Abschirmschicht unter der Funktionsschicht, d.h. von dem Verwender bzw. der Bedienseite weg angeordnet.

Als funktionales Innenausstattungsteil wird ein solches Innenausstattungsteil verstanden, mit dem es möglich ist, eine beliebige Funktion innerhalb des Fahrzeugs, vorzugsweise Kraftfahrzeug zu steuern. Beispielsweise ist somit die Menüsteuerung von Head-up-Displays oder Bildschirmen im Fahrzeug möglich.

Die Funktionsschicht ist eine Schicht, die durch detektierte Änderungen in einem elektrischen Feld das Ausführen der jeweiligen Funktion ermöglicht. Dies geschieht insbesondere dadurch, dass sich durch das Positionieren und Bewegen eines Fingers das mittels elektrischer Feldlinien dargestellte elektrische bzw. elektromagnetische Feld verändert. Insbesondere ist die Funktionsschicht als kapazitive Funktionsschicht ausgebildet, bei der sich die Kapazität ändert, wenn ein Finger eines Verwenders oder ein anderer leitender Gegenstand in Funktionsreichweite kommt.

Der Grundträger kann auch als Schicht ausgebildet sein. Ferner kann der Grundträger eine dreidimensionale Kontur des Innenausstattungsteils ausbilden. So kann der Grundträger beispielsweise die Form eines Komfortelements, wie beispielsweise einer Armauflage oder einer Mittelkonsole ausbilden. Der Grundträger kann beispielsweise aus einem thermoplastischen oder duroplastischen Kunststoff oder einem Faserverbundwerkstoff ausgebildet sein.

Bei der Haptikschicht handelt es sich um eine Schicht, die eine weiche Haptik des funktionalen Innenausstattungsteils erzeugt. Die Haptikschicht kann beispielsweise aus einem Textil, insbesondere einem Vlies, Gewebe oder Gewirke ausgebildet sein. Ebenso kann die Haptikschicht aus einem geschäumten Kunststoff ausgebildet sein. Als "weich" wird das Gegenteil von "hart" oder "fest" verstanden; insbesondere wird als "weich" eine Beschaffenheit verstanden, die einem Druck leicht nachgibt, so dass ein Verändern der Form leicht und mit geringem Kraftaufwand möglich ist.

Mit dem erfindungsgemäßen funktionalen Innenausstattungsteil wird die Aufgabe in zufriedenstellender Weise gelöst. Insbesondere ist es möglich, Bedien- und Komfortzonen räumlich zu integrieren. So ist es beispielsweise konkret möglich, eine Armauflage mit großflächiger und weicher Bedienzone (Touch-Funktionalität) bereitzustellen. Außerdem wird durch den fließenden Übergang zwischen Bedienzone und Komfortzone die Designfreiheit deutlich erhöht.

Damit die Haptikschicht für eine ausreichend weiche Beschaffenheit des Innenausstattungsteils sorgen kann, muss diese eine gewisse Schichtdicke aufweisen. Diese Schichtdicke sorgt allerdings andererseits dafür, dass das zur Bedienung benötigte elektrische Feld (die elektrischen Feldlinien) nicht stark genug ist, um sich durch die "dicke" Haptikschicht zu einer Bedienoberfläche hin auszubreiten. Folglich ist eine Bedienung durch die Haptikschicht hindurch ohne Weiteres nicht möglich oder stark gestört.

Dadurch, dass die elektrische Abschirmschicht auf einer von der Haptikschicht abgewandten Seite der Funktionsschicht angeordnet ist, führt dies zu einer selektiven Sensor-Feldausprägung in Richtung eines Bedien-Halbraums, das bedeutet, dass so eine Bedienung von der Bedienoberfläche her möglich ist. Als Bedienoberfläche wird hierbei die Oberfläche der äußersten (am weitesten von dem Grundträger entfernten) Schicht verstanden.

Eine mögliche Wechselwirkung mit den Feldlinien der Sensoranordnung erfolgt daher nur von der Touch-Seite, d.h. von der Bedienoberfläche und nicht von der B-Seite der Anordnung.

Durch die erhöhte räumliche Sensitivität wird auch der Signal-Störabstand erhöht, so dass mit einer höheren Feldanregung eine höhere Empfindlichkeit ohne Fehlsensierung möglich wird. Die elektrische Abschirmschicht weist eine abschirmende Wirkung gegen elektronische Störeinflüsse, die Signale überdecken bzw. verfälschen können, wie beispielsweise die Stromführung für die Beleuchtungseinheiten

Im Ergebnis führt die Anordnung zu einer verbesserten Erkennung der durch die Touchbedienung veränderten Feldlinien, weil die Störsignale von der der haptischen Schicht abgewandten Seite abgeschirmt werden und dadurch keinen Einfluss auf die zur Bedienungserkennung notwendigen Feldlinien haben.

Bei der Abschirmschicht kann es sich beispielsweise auch lediglich um eine Beschichtung handeln, die auf der B-Seite der Funktionsschicht oder dem Grundträger angeordnet ist.

Gemäß einer vorteilhaften Weiterbildung der Erfindung ist die elektrische Abschirmschicht eine geerdete oder erdbare Erdungsschicht.

Die Erdungsschicht stellt hierbei ein definiertes Bezugspotential bzw. einen Potentialausgleich her.

Gemäß einer vorteilhaften Weiterbildung der Erfindung ist die elektrische Abschirmschicht zumindest bereichsweise aus einem leitfähigen Material ausgebildet.

Vorzugsweise ist die elektrische Abschirmschicht vollständig aus dem leitfähigen Material ausgebildet. Bei dem leitfähigen Material kann es sich beispielsweise um Kupfer, ITO (Indiumzinnoxid) oder CNBs (Carbon NanoBuds) handeln.

Gemäß einer vorteilhaften Weiterbildung der Erfindung weist die elektrische Abschirmschicht eine Beschichtung aus einem leitfähigen Material auf.

Das bedeutet, dass die elektrische Abschirmschicht nicht vollständig aus dem leitfähigen Material ausgebildet sein muss (z. B Gitternetzstruktur etc). Vielmehr ist es ausreichend, wenn diese eine Beschichtung aus einem leitfähigen Material aufweist. Bei der Beschichtung kann es sich insbesondere um CNB oder ITO handeln. Vorteilhafterweise kann hierbei die benötigte Menge an teurem leitfähigen Material verringert werden.

Gemäß einer vorteilhaften Weiterbildung der Erfindung weist die Funktionsschicht eine Vielzahl von Leiterbahnen auf.

Die Leiterbahnen (beispielsweise aus Silber) sind vorzugsweise als Matrixstruktur oder Rautenstruktur oder Flowerstruktur angeordnet. Die Leiterbahnen dienen dazu, der Funktionsschicht ihre Funktion als Schnittstelle zwischen Mensch und Maschine zu verleihen.

Gemäß einer vorteilhaften Weiterbildung der Erfindung ist die Haptikschicht zumindest bereichsweise aus einem weichen Material ausgebildet.

Vorzugsweise ist die Haptikschicht vollständig aus einem weichen Material ausgebildet. Die Haptikschicht ist vorzugsweise aus einem Textil, insbesondere einem Vlies, Gewebe oder Gewirke ausgebildet. Alternativ kann die Haptikschicht aus einem geschäumten Kunststoff ausgebildet sein.

Vorzugsweise kann das funktionale Innenausstattungsteil ferner eine Dekorschicht aufweisen, die auf der Haptikschicht angeordnet ist. Die Dekorschicht dient insbesondere dazu, bei einem Verwender einen wertvermittelnden optischen Eindruck zu hinterlassen. So kann es sich bei der Dekorschicht beispielsweise um Stoff oder Leder handeln. Auch ist eine Schicht denkbar, die diese Materialien imitiert.

Alternativ hierzu ist bereits der Oberflächenbereich der Haptikschicht so bearbeitet, dass dieser die an eine Dekorschicht gestellten Anforderungen erfüllt.

Gemäß einer vorteilhaften Weiterbildung der Erfindung ist die Funktionsschicht mit einem Controller funktional verbunden oder verbindbar.

Vorzugsweise handelt es sich bei dem Controller um einen Mikrocontroller. Durch die funktionale Verbindung wird das beispielsweise durch Finger eingegebene Eingangssignal an den Controller weitergegeben und kann dort entsprechend verarbeitet werden, so dass beispielsweise ein Head-up-Display steuerbar ist.

Gemäß einer vorteilhaften Weiterbildung der Erfindung sind zumindest der Grundträger, die Abschirmschicht, die Funktionsschicht und die Haptikschicht zumindest bereichsweise derart aus einem transparenten oder transluzenten Material ausgebildet, dass Licht von dem Grundträger bis zu der Haptikschicht übertragen werden kann.

Falls die Dekorschicht angeordnet ist, kann auch diese transparent oder transluzent ausgebildet sein.

Durch die transparenten bzw. transluzenten Schichten wird ein Hinterleuchten des Innenausstattungsteils möglich.

Das funktionale Innenausstattungsteil kann ferner eine Lichtquelle und/oder einen Lichtleiter aufweisen. Das Licht der Lichtquelle kann dann entweder direkt oder über den Lichtleiter in das Innenausstattungsteil (insbesondere in den Grundträger) eingekoppelt werden.

Dadurch, dass die Schichten zumindest bereichsweise aus transparentem oder transluzentem Material ausgebildet sind, ist das Licht von einem Verwender an der Bedienoberfläche sichtbar, so dass mit dem Licht auch eine Bedienanzeige, beispielsweise als Menüsteuerung, denkbar ist. Insbesondere ist es hierbei möglich, an der Bedienoberfläche bzw. auf der obersten Schicht, das heißt auf der Haptikschicht oder gegebenenfalls auf der Dekorschicht, Bedienelemente leuchtend hervorzuheben.

Als Materialien bieten sich beispielsweise für den Grundträger Polycarbonat und für die Funktionsschicht und die CNBs, ITO, Kupfer (Mesh), Silber (Mesh) an. Als Haptikschicht kann beispielsweise ein transluzentes Abstandsgewirke verwendet werden. Wird eine Dekorschicht eingesetzt, kann diese beispielsweise perforiert sein. Als Verbindung zwischen den Schichten eignet sich insbesondere transluzenter oder transparenter Kleber.

Die erfindungsgemäße Lösung besteht ferner darin, ein Verfahren zum Herstellen eines der obigen funktionalen Innenausstattungsteile für ein Fahrzeug anzugeben, wobei das Verfahren folgende Schritte aufweist: Bereitstellen des Grundträgers; und Bereitstellen der elektrischen Abschirmschicht, die entweder gemeinsam mit der Funktionsschicht zu einem Verbund laminiert wird und dann anschließend mit dem Grundträger verbunden wird oder vorab mit dem Grundträger verbunden wird.

Gemäß einer vorteilhaften Weiterbildung der Erfindung ist das Verbinden des Verbunds aus elektrischer Abschirmschicht und Funktionsschicht mit dem Grundträger durch Hinterspritzen des Grundträgers integriert.

Insbesondere ist es durch das Verfahren einfach möglich, das Bereitstellen der elektrischen Abschirmschicht in den Herstellungsprozess des Innenausstattungsteils zu integrieren. Durch Hinterspritzen wird ein besonders kosteneffizientes Herstellungsverfahren bereitgestellt, bei dem die vorab zu einem Verbund laminierte elektrische Abschirmschicht und Funktionsschicht in das Werkzeug eingelegt werden können und anschließend mit dem Grundträger hinterspritzt werden.

Die Haptikschicht wird anschließend auf die Funktionsschicht gefügt, vorzugsweise geklebt. Ist eine Dekorschicht vorhanden, so kann diese auf die Haptikschicht kaschiert werden. Hierbei ist insbesondere Nass-, Trocken- oder Thermokaschieren möglich.

Zur Herstellung von Transluzenz ist es möglich, die Dekorschicht mittels eines Laserverfahrens zu bearbeiten.

Weitere Vorteile der Erfindung gehen aus der Beschreibung und den Zeichnungen hervor.

Die Erfindung wird nachstehend anhand der Beschreibung von Ausführungsbeispielen unter Bezugnahme auf die beiliegenden Zeichnungen näher erläutert. Dabei ergeben sich aus der nachfolgenden Beschreibung und der Gesamtheit der Patentansprüche weitere vorteilhafte Ausführungsformen und Merkmalskombinationen der Erfindung.

### Kurze Beschreibung der Zeichnungen

Die zu der Erläuterung der Ausführungsbeispiele verwendeten Zeichnungen zeigen in:
- Fig. 1: eine schematische Darstellung der Schichtstruktur des erfindungsgemäßen funktionalen Innenausstattungsteils; und
- Fig. 2a und 2b: eine schematische Darstellung zur Erläuterung der Funktionsweise der elektrischen Abschirmschicht in dem erfindungsgemäßen funktionalen Innenausstattungsteil.

### Wege zur Ausführung der Erfindung

In den Figuren wird als eine Richtung nach "oben" eine solche Richtung verstanden, die zu einem Verwender hin zeigt, wohingegen eine Richtung nach "unten" eine solche Richtung ist, die von dem Verwender weg und insbesondere zu einer Fahrzeugstruktur hin zeigt.

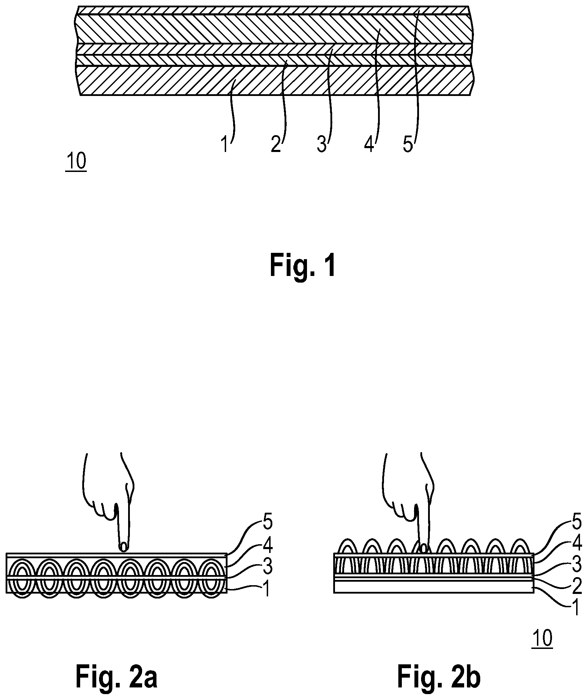

Die Fig. 1 zeigt eine schematische Darstellung der Schichtstruktur eines funktionalen Innenausstattungsteils 10. Das in Fig. 1 dargestellte Innenausstattungsteil 10 weist mehrere, übereinander angeordnete Schichten auf. Dabei ist die unterste Schicht ein Grundträger 1, auf dem die anderen Schichten angeordnet sind bzw. von diesem getragen sind. Über dem Grundträger 1 ist direkt eine elektrische Abschirmschicht 2 angeordnet, auf der wiederum eine Funktionsschicht 3 angeordnet ist.

Wichtig ist hierbei, dass die elektrische Abschirmschicht 2 unter der Funktionsschicht 3 angeordnet ist. Hier ist die elektrische Abschirmschicht 2 exemplarisch zwischen der Funktionsschicht 3 und dem Grundträger 1 angeordnet. Alternativ wäre es hier beispielsweise möglich, die elektrische Abschirmschicht 2 unter dem Grundträger 1 anzuordnen.

Über der Funktionsschicht 3 ist eine Haptikschicht 4 angeordnet. Die Haptikschicht 4 weist eine größere Schichtdicke als die elektrische Abschirmschicht 2 und die Funktionsschicht 3 auf und ist aus einem weichen Material ausgebildet, das entsprechend bei Berührung nachgibt und so einen "weichen" Eindruck bei dem Verwender hinterlässt.

Auf der Haptikschicht 4 ist eine Dekorschicht 5 angeordnet. Die Dekorschicht 5 ist hierbei optional. Alternativ kann die Haptikschicht 4 bzw. genauer die Oberfläche der Haptikschicht 4, die zum Verwender hin zeigt (Bedienoberfläche), so bearbeitet sein, dass diese bereits die optischen Anforderungen an das Innenausstattungsteil 10 erfüllt.

In Fig. 2a und 2b wird die Funktionsweise der elektrischen Abschirmschicht 2 deutlicher. Insbesondere wird hierbei deutlich, wozu die Abschirmschicht 2 zwischen dem Grundträger 1 und der Funktionsschicht 3 angeordnet ist.

Fig. 2a zeigt einen Schichtaufbau mit dem Grundträger 1, der Funktionsschicht 3, der Haptikschicht 4 und der Dekorschicht 5. Insbesondere ist bei dem Schichtaufbau der Fig. 2a die elektrische Abschirmschicht 2 somit nicht angeordnet.

In Fig. 2a sind außerdem die elektrischen Feldlinien der Funktionsschicht 3 eingezeichnet, die kreisförmig von der Funktionsschicht 3 aus ausgehen. Die elektrischen Feldlinien dienen hierbei zur Darstellung des elektrischen Felds als Raum, in dem Kräfte auf Ladungen von der Funktionsschicht 3 aus ausgeübt werden können.

Hierbei ist insbesondere zu erkennen, dass das elektrische Feld nicht bis zu der von dem Finger eines Verwenders zu erreichenden Bedienoberfläche, hier Dekorschicht 5, reicht.

Folglich ist bei der in Fig. 2a dargestellten Schichtstruktur eine Interaktion des Verwenders mit der Funktionsschicht 3 nicht möglich.

In Fig. 2b ist der Schichtaufbau des funktionalen Innenausstattungsteils 10 gemäß der vorliegenden Erfindung dargestellt, bei dem zusätzlich zu dem Grundträger 1, der Funktionsschicht 3, der Haptikschicht 4 und der Dekorschicht 5 die elektrische Abschirmschicht 2 angeordnet ist. Hierbei ist die elektrische Abschirmschicht 2 so angeordnet, dass diese sandwichartig zwischen dem Grundträger 1 und der Funktionsschicht 3 liegt.

Die elektrische Abschirmschicht 2 ist aus einem leitfähigen Material ausgebildet oder weist ein derartiges leitfähiges Material auf, und ist mit der Erde verbunden. Dadurch führt die elektrische Abschirmschicht 2 zu einer selektiven Sensor-Feldausprägung in Richtung des Bedien-Halbraumes.

Eine mögliche Wechselwirkung mit den Feldlinien der Sensoranordnung erfolgt daher nur von der Touch-Seite und nicht von der B-Seite der Anordnung.

Mit der erhöhten räumlichen Sensitivität erhöht sich der Signal-Störabstand, so dass mit einer höheren Feldanregung eine höhere Empfindlichkeit ohne Fehlsensierung möglich wird.

Im Ergebnis führt die Anordnung zu einer verbesserten Erkennung der durch die Touchbedienung veränderten Feldlinien (entweder Störung, Abschwächung oder Ableitung), weil die Störsignale von der der haptischen Schicht abgewandten Seite abgeschirmt werden und dadurch keinen Einfluss auf die zur Bedienungserkennung notwendigen Feldlinien haben.

Somit reicht das elektrische Feld weiter von der Funktionsschicht 3 in Richtung des Verwenders.

Folglich kann ein Verwender mit seinem Finger das elektrische Feld erreichen und hiermit in Interaktion mit der Funktionsschicht 3 treten. Ist der Finger des Verwenders in dem elektrischen Feld, entsteht ein geringer Ladungstransport. Dieser kann detektiert bzw. gemessen werden, so dass die Berührungsposition des Fingers ausgemacht werden kann. Die Verarbeitung dieser Informationen findet in einem Controller statt.

Somit ermöglicht die elektrische Abschirmschicht 2 auch eine kapazitive Bedienung durch die verhältnismäßig dicke Haptikschicht 4 hindurch. Dies ermöglicht, eine Bedienzone "unsichtbar" in einer Komfortzone zu integrieren.

### BEZUGSZEICHENLISTE

- 10: funktionales Innenausstattungsteil
- 1: Grundträger
- 2: elektrische Abschirmschicht
- 3: Funktionsschicht
- 4: Haptikschicht
- 5: Dekorschicht

## Patentansprüche

1. Funktionales Innenausstattungsteil (10) für ein Fahrzeug, das eine Schichtstruktur aufweist, wobei die Schichtstruktur zumindest einen Grundträger (1), eine Funktionsschicht (3) und eine Haptikschicht (4) aufweist,
**dadurch gekennzeichnet, dass**
das funktionale Innenausstattungsteil (10) eine elektrische Abschirmschicht (2) aufweist, wobei die elektrische Abschirmschicht (2) zu einer selektiven Sensor-Feldausprägung in Richtung eines Bedien-Halbraumes führt, und die elektrische Abschirmschicht (2) auf einer von der Haptikschicht (4) abgewandten Seite der Funktionsschicht (3) angeordnet ist.

2. Funktionales Innenausstattungsteil (10) für ein Fahrzeug gemäß Anspruch 1, wobei die elektrische Abschirmschicht (2) eine geerdete oder erdbare Erdungsschicht ist.

3. Funktionales Innenausstattungsteil (10) für ein Fahrzeug gemäß Anspruch 1 oder 2, wobei die elektrische Abschirmschicht (2) zumindest bereichsweise aus einem leitfähigen Material ausgebildet ist.

4. Funktionales Innenausstattungsteil (10) für ein Fahrzeug gemäß einem der vorherigen Ansprüche,
wobei die elektrische Abschirmschicht (2) eine Beschichtung aus einem leitfähigen Material aufweist.

5. Funktionales Innenausstattungsteil (10) für ein Fahrzeug gemäß einem der vorherigen Ansprüche,
wobei die Funktionsschicht (3) eine Vielzahl von Leiterbahnen aufweist.

6. Funktionales Innenausstattungsteil (10) für ein Fahrzeug gemäß einem der vorherigen Ansprüche,
wobei die Haptikschicht (4) zumindest bereichsweise aus einem weichen Material ausgebildet ist.

7. Funktionales Innenausstattungsteil (10) für ein Fahrzeug gemäß einem der vorherigen Ansprüche,
wobei die Funktionsschicht (3) mit einem Controller funktional verbunden oder verbindbar ist.

8. Funktionales Innenausstattungsteil (10) für ein Fahrzeug gemäß einem der vorherigen Ansprüche,
wobei zumindest der Grundträger (1), die elektrische Abschimschicht (2), die Funktionsschicht (3) und die Haptikschicht (4) zumindest bereichsweise derart aus einem transparenten oder transluzenten Material ausgebildet sind, dass Licht von dem Grundträger (1) bis zu der Haptikschicht (4) übertragen werden kann.

9. Verfahren zum Herstellen eines funktionalen Innenausstattungsteils (10) für ein Fahrzeug gemäß einem der Ansprüche 1 bis 8, wobei das Verfahren folgende Schritte aufweist:
- Bereitstellen des Grundträgers (1); und
- Bereitstellen der elektrischen Abschirmschicht (2), die entweder gemeinsam mit der Funktionsschicht (3) zu einem Verbund laminiert wird und dann anschließend mit dem Grundträger (1) verbunden wird oder vorab mit dem Grundträger (1) verbunden wird.

10. Verfahren gemäß Anspruch 9,
wobei das Verbinden des Verbunds aus elektrischer Abschirmschicht (2) und Funktionsschicht (3) mit dem Grundträger (1) durch Hinterspritzen des Grundträgers (1) integriert wird.

## Claims

1. Functional interior fitting part (10) for a vehicle, comprising a layer structure, wherein the layer structure comprises at least a base support (1), a functional layer (3) and a haptic layer (4),
**characterized in that**
the functional interior fitting part (10) comprises an electrical shielding layer (2) wherein the electrical shielding layer (2) leads to a selective sensor field characteristic in a direction of an operating half-space, and the electrical shielding layer (2) is arranged on a side of the functional layer (3) facing away from the haptic layer (4).

2. Functional interior fitting part (10) for a vehicle according to Claim 1,
wherein the electrical shielding layer (2) is a grounded or groundable grounding layer.

3. Functional interior fitting part (10) for a vehicle according to Claim 1 or 2,
wherein the electrical shielding layer (2) is formed from a conductive material at least regionally.

4. Functional interior fitting part (10) for a vehicle according to any of the preceding claims,
wherein the electrical shielding layer (2) comprises a coating composed of a conductive material.

5. Functional interior fitting part (10) for a vehicle according to any of the preceding claims,
wherein the functional layer (3) comprises a plurality of conductor tracks.

6. Functional interior fitting part (10) for a vehicle according to any of the preceding claims,
wherein the haptic layer (4) is formed from a soft material at least regionally.

7. Functional interior fitting part (10) for a vehicle according to any of the preceding claims,
wherein the functional layer (3) is functionally connected or connectable to a controller.

8. Functional interior fitting part (10) for a vehicle according to any of the preceding claims,
wherein at least the base support (1), the electrical shielding layer (2), the functional layer (3) and the haptic layer (4) are formed from a transparent or translucent material at least regionally in such a way that light can be transmitted from the base support (1) as far as the haptic layer (4).

9. Method for producing a functional interior fitting part (10) for a vehicle according to any of Claims 1 to 8, wherein the method comprises the following steps:
- providing the base support (1); and
- providing the electrical shielding layer (2), which either is laminated jointly with the functional layer (3) to form a composite and is then subsequently bonded to the base support (1) or is bonded to the base support (1) beforehand.

10. Method according to Claim 9,
wherein bonding the composite composed of electrical shielding layer (2) and functional layer (3) to the base support (1) is integrated by insert moulding of the base support (1).

## Revendications

1. Pièce d'habillage intérieur fonctionnelle (10) destinée à un véhicule, laquelle comporte une structure en couches, la structure en couches comportant au moins un support de base (1), une couche fonctionnelle (3) et une couche haptique (4),
**caractérisée en ce que**
la pièce d'habillage intérieur fonctionnelle (10) comporte une couche de blindage électrique (2), la couche de blindage électrique (2) ayant une caractéristique de champ de capteur sélective en direction d'un demi-espace de fonctionnement, et la couche de blindage électrique (2) étant disposée sur un côté de la couche fonctionnelle (3) qui est opposé à la couche haptique (4).

2. Pièce d'habillage intérieur fonctionnelle (10) destinée à un véhicule selon la revendication 1, la couche de blindage électrique (2) étant une couche de terre mise à la terre ou pouvant être mise à la terre.

3. Pièce d'habillage intérieur fonctionnelle (10) destinée à un véhicule selon la revendication 1 ou 2,
la couche de blindage électrique (2) étant formée au moins par endroits à partir d'un matériau conducteur.

4. Pièce d'habillage intérieur fonctionnelle (10) destinée à un véhicule selon l'une des revendications précédentes,
la couche de blindage électrique (2) comportant un revêtement en matériau conducteur.

5. Pièce d'habillage intérieur fonctionnelle (10) destinée à un véhicule selon l'une des revendications précédentes,
la couche fonctionnelle (3) comportant un grand nombre de pistes conductrices.

6. Pièce d'habillage intérieur fonctionnelle (10) destinée à un véhicule selon l'une des revendications précédentes,
la couche haptique (4) étant formée au moins par endroits à partir d'un matériau souple.

7. Pièce d'habillage intérieur fonctionnelle (10) destinée à un véhicule selon l'une des revendications précédentes,
la couche fonctionnelle (3) étant reliée ou pouvant être reliée fonctionnellement à un contrôleur.

8. Pièce d'habillage intérieur fonctionnelle (10) destinée à un véhicule selon l'une des revendications précédentes,
au moins le support de base (1), la couche de blindage électrique (2), la couche fonctionnelle (3) et la couche haptique (4) étant au moins par endroits en un matériau transparent ou translucide de manière à ce que la lumière puisse être transmise du support de base (1) à la couche haptique (4).

9. Procédé de fabrication d'une pièce d'habillage intérieur fonctionnelle (10) destinée à un véhicule selon l'une des revendications 1 à 8, le procédé comportant les étapes suivantes :
- fournir le support de base (1) ; et
- fournir la couche de blindage électrique (2), qui est soit stratifiée avec la couche fonctionnelle (3) pour former un composite puis reliée ensuite au support de base (1) soit préalablement reliée au support de base (1).

10. Procédé selon la revendication 9,
la liaison du composite formé de la couche de blindage électrique (2) et de la couche fonctionnelle (3) au support de base (1) étant intégrée par moulage par rétro-injection du support de base (1).
